# EUROPÄISCHE PATENTSCHRIFT

(11) **EP 2 890 591 B1**
(45) Veröffentlichungstag und Bekanntmachung des Hinweises auf die Patenterteilung: **26.05.2021**
(21) Anmeldenummer: 13753831.0
(22) Anmeldetag: 14.08.2013
(51) Int. Cl.: B60Q 11/00, B60Q 1/14

(54) **VERFAHREN FÜR DEN BETRIEB EINES LICHTSYSTEMS UND LICHTSYSTEM**
METHOD FOR OPERATING A LIGHT SYSTEM AND LIGHT SYSTEM
PROCÉDÉ PERMETTANT DE FAIRE FONCTIONNER UN SYSTÈME D'ÉCLAIRAGE ET SYSTÈME D'ÉCLAIRAGE

(30) Priorität: 29.08.2012 DE 102012107946
(43) Veröffentlichungstag der Anmeldung: 08.07.2015
(73) Patentinhaber: HELLA GmbH & Co. KGaA, 59552 Lippstadt (DE)
(72) Erfinder: WILKS, Carsten, 59555 Lippstadt (DE); NABER, Michael, 59229 Ahlen (DE)
(86) Internationale Anmeldenummer: PCT/EP2013/066956
(87) Internationale Veröffentlichungsnummer: WO 2014/032969

(56) Entgegenhaltungen:
- EP-A1- 1 442 928
- EP-A1- 2 261 556
- EP-A2- 2 455 656
- DE-A1-102007 028 658
- DE-U1-202011 103 805
- FR-A1- 2 878 797
- US-A1- 2006 139 938

## Beschreibung

Die vorliegende Erfindung betrifft ein Verfahren für den Betrieb eines Lichtsystems zur Erzeugung einer ersten und einer zweiten Lichtfunktion sowie ein Lichtsystem eines Fahrzeugs zur Erzeugung einer ersten und einer zweiten Lichtfunktion.

Verfahren für den Betrieb von Lichtsystemen und entsprechende Lichtsysteme für die Erzeugung einer ersten und einer zweiten Lichtfunktion sind grundsätzlich bekannt. Sie werden z. B. in Fahrzeugen eingesetzt, um mittels Scheinwerfern ein Abblendlicht als erste Lichtfunktion und ein Fernlicht als zweite Lichtfunktion zur Verfügung zu stellen. Dabei wird bei bekannten Verfahren und bei bekannten Lichtsystemen eine Umschaltung zwischen Abblendlicht und Fernlicht ermöglicht. Auch ist es bereits bekannt, dass das Fernlicht ein selektives Fernlicht, insbesondere ein geregeltes Fernlicht, darstellt. Dies bezieht sich auf eine Verwendung des Fernlichts, auch wenn Gegenverkehr vor dem Fahrzeug auftaucht. Mit einem selektiven bzw. geregelten Fernlicht kann ein selektives und damit gezieltes Entblenden des Gegenverkehrs stattfinden. Somit kann bei bekannten Lichtsystemen die Ausleuchtung um den Gegenverkehr herum in fernlichtartiger Weise erfolgen, ohne den Gegenverkehr zu blenden. Dies führt zu einer verbesserten Ausleuchtsituation vor dem Fahrzeug.

Nachteilhaft bei bekannten Verfahren für Lichtsysteme und derartigen Lichtsystemen ist es jedoch, dass beim Ausfall der Regelung des Fernlichts, insbesondere beim Ausfall des selektiven Fernlichts, die Gefahr der Blendung des Gegenverkehrs besteht. Wird z. B. eine mechanisch bewegte Blende für das Teilentblenden für den Gegenverkehr verwendet, so kann es vorkommen, dass diese Mechanik klemmt bzw. eine genaue Positionierung der Blende nicht möglich ist. Dies führt zur Gefahr der Blendung des Gegenverkehrs. Dies ist zu vermeiden, um das Risiko einer Blendung des Gegenverkehrs im Straßenverkehr zu reduzieren. Dementsprechend muss in einem solchen Fehlerfall bei bekannten Lichtsystemen und bei bekannten Verfahren zur Regelung solcher Lichtsysteme das komplette zugehörige Lichtmodul ausgeschaltet werden, wodurch beide Lichtfunktionen, also sowohl das Fernlicht, als auch das Abblendlicht, ausgeschaltet werden. Der entsprechende Scheinwerfer wird also dunkel geschaltet, so dass auch das Abblendlicht, welches eigentlich nicht zur Blendung des Gegenverkehrs beitragen würde, durch das Abschalten eines der beiden Scheinwerfer und dem entsprechenden Lichtmodul geschwächt wird. Im Fehlerfall eines selektiven Fernlichts wird also die Ausleuchtung stärker reduziert als es eigentlich notwendig wäre.

Weiterhin sind Lichtsysteme beispielsweise aus den Dokumenten EP 1 442 928 A1, FR 2 878 797 A1, EP 2 261 556 A1, US 2006/139938 A1, DE 20 2011 103805 U1, DE 10 2007 028658 A1 sowie EP 2 455 656 A2 bekannt.

Es ist Aufgabe der vorliegenden Erfindung, die voranstehend beschriebenen Nachteile zumindest teilweise zu beheben. Insbesondere ist es Aufgabe der vorliegenden Erfindung, ein Verfahren für den Betrieb eines Lichtsystems sowie ein Lichtsystem eines Fahrzeugs zur Erzeugung einer ersten und einer zweiten Lichtfunktion zur Verfügung zu stellen, welche in kostengünstiger und einfacher Weise auch im Fehlerfall für die zweite Lichtfunktion eine ausreichende Ausleuchtung vor dem Fahrzeug zur Verfügung stellen können.

Die voranstehende Aufgabe wird gelöst durch ein Verfahren mit den Merkmalen des Anspruchs 1 sowie durch ein Lichtsystem mit den Merkmalen des Anspruchs 3.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Lichtsystem und jeweils umgekehrt, so dass bzgl. der Offenbarung zu den einzelnen Erfindungsaspekten stets wechselseitig Bezug genommen wird bzw. werden kann.

Ein erfindungsgemäßes Verfahren dient dem Betrieb eines Lichtsystems zur Erzeugung von einer ersten und einer zweiten Lichtfunktion mit jeweils einem separaten Lichtmodul. Dabei ist zumindest die zweite Lichtfunktion mit einem veränderbaren Ausleuchtbereich versehen. Ein erfindungsgemäßes Verfahren weist die folgenden Schritte auf:
- Erkennen eines Fehlers bei dem veränderten Ausleuchtbereich der zweiten Lichtfunktion,
- Ausschalten des Lichtmoduls der zweiten Lichtfunktion,
- Weiterbetrieb des Lichtmoduls der ersten Lichtfunktion.

Ein Lichtsystem für ein erfindungsgemäßes Verfahren dient der Erzeugung von einer ersten und einer zweiten Lichtfunktion. Die erste Lichtfunktion ist ein Abblendlicht und die zweite Lichtfunktion ist ein Fernlicht eines Fahrzeugs Die zweite Lichtfunktion, also das Fernlicht des Fahrzeugs, weist einer veränderbaren Ausleuchtbereich auf. Der Ausleuchtbereich ist der durch das entsprechende Lichtmodul der Lichtfunktion erhellte Bereich vor dem Fahrzeug. Der Ausleuchtbereich des Fernlichts, also der zweiten Lichtfunktion, ist im Sinne der vorliegenden Erfindung veränderbar. Er kann an die aktuellen Gegebenheiten der Umgebungssituation des Fahrzeugs angepasst werden. Dabei handelt es sich z. B. um eine Situation, in welcher bei aktiviertem Fernlicht dem Fahrzeug Gegenverkehr entgegenkommt. Bei dieser Situation musste bei ursprünglichen Fernlichtsystemen das Fernlicht ganz ausgeschaltet werden. Ist nun die zweite Lichtfunktion mit einem veränderbaren Ausleuchtbereich versehen, so kann die Veränderung des Ausleuchtbereichs ein selektives Entblenden des Gegenverkehrs erzeugen. Damit wird die gesamte Ausleuchtsituation vor dem Fahrzeug verbessert und nur eine minimale Einschränkung eines entleuchteten Bereichs in Kauf genommen.

Im Falle eines Fehlers bei der selektiven veränderbaren Ausleuchtung des Ausleuchtbereichs der zweiten Lichtfunktion wird im Gegensatz zu bekannten Verfahren erfindungsgemäß nicht mehr das einzige Lichtmodul und damit der gesamte Scheinwerfer des Fahrzeugs stillgelegt. Vielmehr kann durch die Separierung in zwei Lichtmodule, welche jeweils einer der beiden Lichtfunktionen zugeordnet sind, das Lichtmodul der ersten Lichtfunktion weiterbetrieben werden. Mit anderen Worten kann der entsprechende Scheinwerfer, welcher ein fehlerhaftes Fernlicht und damit eine fehlerhafte zweite Lichtfunktion aufweist, zumindest das Abblendlicht, also die erste Lichtfunktion, weiter zur Verfügung stellen. Dies verbessert im Vergleich zu bekannten Verfahren die Ausleuchtsituation vor dem Fahrzeug, da auf der entsprechenden Scheinwerferseite des Fahrzeugs kein blinder Fleck durch vollständiges Ausschalten des Scheinwerfers entsteht. Dieses Verfahren wird insbesondere bei Lichtsystemen eingesetzt, welche separate Lichtmodule für jede der beiden Lichtfunktionen aufweisen.

Unter einem Lichtmodul ist im Sinne der vorliegenden Erfindung ein Modul zu verstehen, welches in der Lage ist den entsprechenden Ausleuchtbereich der Lichtfunktion zur Verfügung zu stellen. Somit weist jedes Lichtmodul wenigstens eine Lichtquelle und entsprechende optische Bauteile auf, um das von den Lichtquellen emittierte Licht in den gewünschten Ausleuchtbereich zu bringen. Die optischen Bauteile können z. B. Blenden, Reflektoren oder Linsen sein. Auch lichtleitende Bauteile, sogenannte TIR-Körper (Total Internal Reflection) sind im Rahmen der vorliegenden Erfindung denkbar. Als Lichtquellen können unter anderem LEDs eingesetzt werden, welche besonders kostengünstig und effizient arbeiten. Selbstverständlich sind für die Lichtmodule jedoch auch andere Leuchtmittel, z. B. Halogen- oder Xenonleuchtmittel, möglich. Auch Lasersysteme sind als Lichtquellen im Sinne der vorliegenden Erfindung einsetzbar.

Die Veränderbarkeit des Ausleuchtbereichs kann sowohl in mechanischer, als auch in regelungstechnischer Weise erfolgen. Mechanisch kann z. B. eine Aktorik vorgesehen sein, die über eine verschieb- oder rotierbare Blende einen Teil der zweiten Lichtfunktion ausblendet und damit einen entblendeten Bereich für den Gegenverkehr im zugehörigen Ausleuchtbereich zur Verfügung stellt. Alternativ oder zusätzlich kann über Regelungstechnik in matrixartiger Anordnung von einer Vielzahl von Leuchtmitteln ein Teil dieser Leuchtmittel selektiv ausgeschaltet werden, so dass innerhalb eines Lichtmoduls ein blinder Fleck als entblendeter Bereich für den Gegenverkehr zur Verfügung gestellt werden kann. Ein Fehlerfall hinsichtlich mechanischer Ausbildung der Veränderbarkeit kann z. B. der Verlust der Lagepositionserkennung einer solchen Blende sein. Auch ein Verklemmen der Mechanik wäre ein solcher Fehlerfall. Hinsichtlich einer regelungstechnischen Ausgestaltungsform bei z. B. matrixartig angeordneten Leuchtmitteln wäre der Fehlerfall z. B. der Ausfall des Regelungssystems des entsprechenden Lichtmoduls. In beiden Fällen ist es nicht mehr gewährleistet, dass der entblendete Bereich zur Deckung gebracht wird mit dem Gegenverkehr. In diesem Falle wird das zweite Lichtmodul vollständig ausgeschaltet und nur das erste Lichtmodul weiterbetrieben, so dass trotz bestehenbleibender Ausleuchtung vor dem Fahrzeug eine Blendung des Gegenverkehrs wirksam auch im Fehlerfall vermieden wird.

Es ist vorgesehen, dass bei einem erfindungsgemäßen Verfahren die Erkennung des Fehlers zumindest teilweise durch eine aktive Überwachung des durch die zweite Lichtfunktion erzeugten Ausleuchtbereichs durchgeführt wird. Dies kann z. B. mittels Kamerasystemen erfolgen. Unter einer aktiven Überwachung ist also eine große Regelungsschleife zu verstehen, bei welcher der Ausleuchtbereich vor dem Fahrzeug überwacht wird. Eine Rückkopplung innerhalb des Verfahrens, also innerhalb einer Recheneinheit zur Regelung einer mechanischen Aktorik oder einer maxtrixartigen Anordnung von Leuchtmitteln ist hier nicht mehr zwingend erforderlich. Ein großer Vorteil dieser Ausführungsform ist die erhöhte Sicherheit, da die tatsächliche Situation der Straße vor dem Fahrzeug zur Erkennung des Fehlers bei der Überwachung eingesetzt wird.

Vorteilhaft ist es darüber hinaus, wenn bei einem erfindungsgemäßen Verfahren der Weiterbetrieb des Lichtmoduls der ersten Lichtfunktion mit erhöhter Lichtleistung erfolgt. Im Fehlerfall wird trotz des Fernlichtwunsches des Fahrers des Fahrzeugs das entsprechende Lichtmodul der zweiten Lichtfunktion, also des Fernlichts, ausgeschaltet. Um in einem solchen Fall die Reduktion der Lichtintensität in diesem Teil des Ausleuchtbereichs vor dem Fahrzeug, also z. B. beim linken oder rechten Scheinwerfer des Fahrzeugs, auszugleichen ohne den Gegenverkehr zu blenden, kann die Lichtintensität des weiterbetriebenen ersten Lichtmoduls erhöht werden. So wird auf diese Weise der ausgeleuchtete Bereich, welcher keine Blendgefahr für den Gegenverkehr darstellt, mit höherer Lichtintensität versorgt. Die Helligkeit nimmt auf diese Weise also zu, so dass zumindest teilweise hinsichtlich der Lichtintensität der Ausleuchtung dieses Teils des Ausleuchtbereichs vor dem Fahrzeug ein Ausgleich des nun fehlenden ausgeschalteten zweiten Lichtmoduls durchgeführt werden kann.

Im Rahmen der vorliegenden Erfindung ist das Lichtmodul zur Erzeugung der ersten Lichtfunktion insbesondere das erste Lichtmodul und das Lichtmodul zur Erzeugung der zweiten Lichtfunktion insbesondere das zweite Lichtmodul.

Ein weiterer Gegenstand der vorliegenden Erfindung ist ein Lichtsystem eines Fahrzeugs zur Erzeugung einer ersten und einer zweiten Lichtfunktion. Dabei weist zumindest die zweite Lichtfunktion einen veränderten Ausleuchtbereich auf. Ein erfindungsgemäßes Lichtsystem zeichnet sich dadurch aus, dass zumindest ein erstes Lichtmodul zur Erzeugung der ersten Lichtfunktion und wenigstens ein zweites Lichtmodul zur Erzeugung der zweiten Lichtfunktion vorgesehen sind. Dabei wird im Falle eines Fehlers bei dem veränderten Ausleuchtbereich der zweiten Lichtfunktion das zweite Lichtmodul ausgeschaltet und das erste Lichtmodul weiterbetrieben. Insofern bezieht sich ein erfindungsgemäßes Lichtsystem auf ein erfindungsgemäßes Verfahren. Es bringt dementsprechend die gleichen Vorteile mit sich, wie sie ausführlich mit Bezug auf ein erfindungsgemäßes Verfahren erläutert worden sind. Die erste und die zweite Lichtfunktion stellen als erste Lichtfunktion ein Abblendlicht und als zweite Lichtfunktion ein Fernlicht eines Fahrzeugs zur Verfügung. Die Separierung der beiden Lichtmodule ist insbesondere hinsichtlich einer separaten Regelung, einer separaten Steuerung und einer separaten Veränderung der emittierten Lichtrichtungen zu verstehen.

Ein erfindungsgemäßes Lichtsystem ist dahingehend weitergebildet, dass eine Recheneinheit vorgesehen ist, welche für die Ausführung eines erfindungsgemäßen Verfahrens ausgebildet ist. Dementsprechend bringt ein solches Lichtsystem die gleichen Vorteile mit sich, wie sie ausführlich mit Bezug auf ein erfindungsgemäßes Verfahren erläutert worden sind.

Ein erfindungsgemäßes Lichtsystem kann dahingehend weitergebildet sein, dass das zweite Lichtmodul eine mechanische Aktorik aufweist, um den Ausleuchtbereich der zweiten Lichtfunktion zu verändern. Diese mechanische Aktorik kann z. B. eine Blende sein, welche durch Rotation oder Verschieben eine andere Position einnehmen kann. Damit kann die Blende einen Teil der Emission des Lichts dieses Lichtmoduls ausblenden, so dass innerhalb des zugehörigen Ausblendbereichs der zweiten Lichtfunktion ein entblendeter Bereich zur Entblendung des Gegenverkehrs zur Verfügung gestellt werden kann. Die mechanische Aktorik kann über Hebelsysteme und/oder elektrische Drehmotoren verfügen. Zusätzlich oder alternativ zu Blenden können auch Spiegel, Reflektoren und/oder Linsen eingesetzt werden.

Vorteilhaft ist es ebenfalls, wenn bei einem erfindungsgemäßen Lichtsystem das zweite Lichtmodul eine Mehrzahl von Lichtquellen aufweist, welche insbesondere matrixförmig zueinander angeordnet sind, um den Ausleuchtbereich der zweiten Lichtfunktion zu verändern. Dabei handelt es sich um eine alternativ oder kombinatorisch einsetzbare Möglichkeit der Veränderung des Ausleuchtbereichs der zweiten Lichtfunktion. Eine im Wesentlichen matrixartige Anordnung von einer Mehrzahl von Lichtquellen führt dazu, dass einzelne Lichtquellen ausgeschaltet werden können, so dass innerhalb der Matrixfeldbeleuchtung ein entblendeter Bereich durch gezieltes und selektives Ausschalten einzelner Lichtquellen zur Verfügung gestellt werden kann. Hierfür ist die Regelungstechnik dieser Matrix entscheidend, um fehlerfrei eine solche Entblendung zur Verfügung stellen zu können. Ist diese Regelungstechnik mit Fehlern behaftet, so kann ein erfindungsgemäßes Verfahren bei einem erfindungsgemäßen Lichtsystem die unerwünschte Blendung des Gegenverkehrs durch Ausschalten des zweiten Lichtmoduls vermeiden.

Vorteilhaft ist es ebenfalls, wenn bei einem erfindungsgemäßen Lichtsystem die Lichtmodule Lichtquellen mit Leuchtmitteln in Form von LEDs aufweisen. Diese sind besonders kostengünstig und einfach einsetzbar, so dass ein erfindungsgemäßes Lichtsystem dieser Ausführungsform ebenfalls besonders kostengünstig und einfach zur Verfügung gestellt werden kann.

Darüber hinaus kann es von Vorteil sein, wenn bei einem erfindungsgemäßen Lichtsystem zumindest eine Kontrolleinheit vorgesehen ist, um einen Fehler bei einem veränderten Ausleuchtbereich der zweiten Lichtfunktion zu erkennen. Dies kann in aktiver Weise z. B. ein Kamerasystem sein, welches den Ausleuchtbereich der zweiten Lichtfunktion überwacht.

Ein erfindungsgemäßes Lichtsystem wird näher erläutert anhand der beigefügten Zeichnungsfiguren. Die dabei verwendeten Begrifflichkeiten "links", "rechts", "oben" und "unten" beziehen sich auf eine Ausrichtung der Zeichnungsfiguren mit normal lesbaren Bezugszeichen. Es zeigen schematisch:
- Fig.1: in Draufsicht eine schematische Darstellung verschiedener Ausleuchtbereiche vor einem Fahrzeug,
- Fig. 2: eine schematische Darstellung einer ersten Ausführungsform eines erfindungsgemäßen Lichtsystems und
- Fig. 3: eine schematische Darstellung einer weiteren Ausführungsform eines erfindungsgemäßen Lichtsystems.

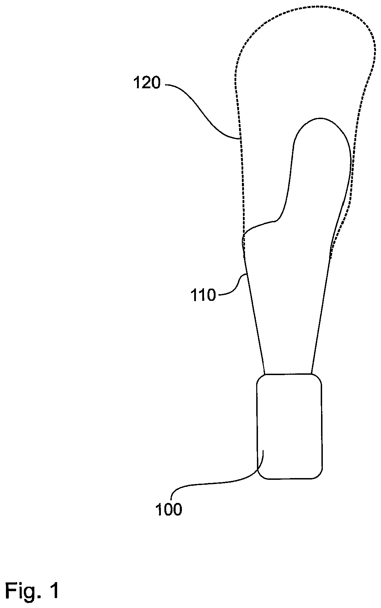

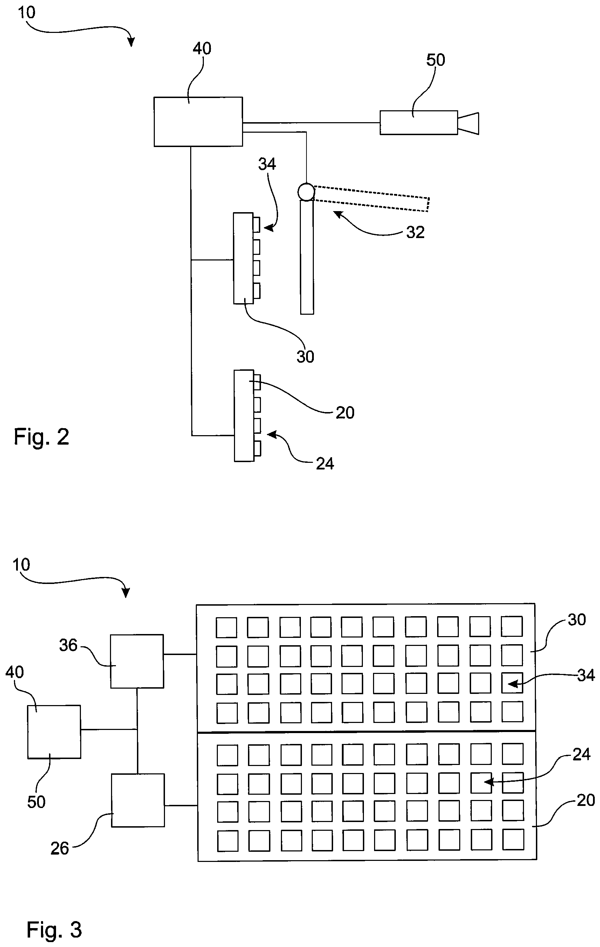

In Figur 1 wird in Draufsicht ein Fahrzeug 100 dargestellt. Dieses weist nicht näher dargestellte Scheinwerfer auf der nach oben ausgerichteten Vorderseite des Fahrzeugs 100 auf, welche links und rechts am Fahrzeug 100 angeordnet sind. Diese stellen gemeinsam zwei Ausleuchtbereiche 110 und 120 zur Verfügung. Jeder dieser Scheinwerfer ist als Lichtsystem 10 ausgebildet, wie sie z. B. in den Figuren 2 und 3 dargestellt sind. So sind über die Lichtsysteme 10 dieser Scheinwerfer zwei Ausleuchtbereiche 110 und 120 separat voneinander als erster Ausleuchtbereich 110 und als zweiter Ausleuchtbereich 120 zur Verfügung gestellt.

Der erste Ausleuchtbereich 110 der ersten Lichtfunktion zeigt schematisch eine Abblendlichtfunktion des Fahrzeugs 100. Der zweite Ausleuchtbereich 120 zeigt schematisch für die zweite Lichtfunktion eine Fernlichtfunktion des Fahrzeugs 100. Die Fernlichtfunktion des zweiten Ausleuchtbereichs 120 ist selektiv ausgestaltet, so dass in Figur 1 von oben entgegen kommender Gegenverkehr für das Fahrzeug 100 durch dieses Fernlicht nicht geblendet wird, da ein selektives Entblenden dieses Gegenverkehr-Fahrzeugs durchgeführt werden kann. Hierfür sind sowohl mechanische Aktoriksysteme als auch matrixartige Anordnungen von einer Vielzahl von Lichtquellen 24 und 34 im Rahmen der vorliegenden Erfindung denkbar.

Figur 2 zeigt schematisch eine Ausführungsform eines erfindungsgemäßen Lichtsystems 10. Dieses ist mit einem ersten Lichtmodul 20 und einem zweiten Lichtmodul 30 versehen. Das erste Lichtmodul 20 weist eine Vielzahl von Lichtquellen 24 in Form von LEDs auf und ist mit einer gemeinsamen Recheneinheit 40 verbunden. Dieses erste Lichtmodul 20 dient dazu, die erste Lichtfunktion und damit das Abblendlicht zur Verfügung zu stellen, wie es in Figur 1 der Ausleuchtbereich 110 darstellt.

Ebenfalls in Figur 2 zu erkennen ist ein zweites Lichtmodul 30 mit einer Vielzahl von Lichtquellen 34, welche bei dieser Ausführungsform als LEDs ausgebildet sind. Dieses zweite Lichtmodul 30 dient dazu, den zweiten Ausleuchtbereich 120 und damit eine Fernlichtfunktion als zweite Lichtfunktion zur Verfügung zu stellen. Auch das zweite Lichtmodul 30 ist in signalkommunizierender Weise mit der Recheneinheit 40 verbunden.

Wie der Figur 2 weiter zu entnehmen ist, ist eine mechanische Aktorik 32 vorgesehen, welche in Form einer rotierbaren Blende ausgebildet ist. Mit punktierter Strichlinie ist dabei die geöffnete Blende und mit durchgezogener Linie die geschlossene Blende dargestellt. Auch diese mechanische Aktorik 32 ist in signalkommunizierender Weise mit der Recheneinheit 40 verbunden. Im Fehlerfall, also wenn nicht bestimmbar ist, in welcher Position die Blende der mechanischen Aktorik 32 bewegbar ist, besteht die Gefahr eines Blendens des Gegenverkehrs, wenn die Fernlichtfunktion für den Ausleuchtbereich 120 aktiviert ist. In diesem Fall wird ein erfindungsgemäßes Verfahren in der Recheneinheit 40 durchgeführt und schaltet das zweite Lichtmodul 30 ab, während das erste Lichtmodul 20 weiterbetrieben wird.

In Figur 2 ist weiter eine Ausführung dargestellt, bei welcher über eine Kontrolleinheit 50, z. B. in Form eines Kamerasystems, der zweite Ausleuchtbereich 120 direkt, insbesondere aktiv, überwacht wird. So kann der direkte Effekt eines Fehlers vor dem Fahrzeug 100 über diese Kontrolleinheit 50 erkannt werden und an die Recheneinheit 40 zur Durchführung eines erfindungsgemäßen Verfahrens weitergegeben werden.

Die Figur 3 zeigt eine weitere Ausführungsform eines erfindungsgemäßen Lichtsystems, bei welcher die beiden Lichtmodule 20 und 30 übereinander angeordnet sind. Jedes dieser beiden Lichtmodule 20 und 30 weist eine Vielzahl von matrixartig angeordneten Lichtquellen 24 und 34 in Form von LEDs auf. Für jedes der beiden Lichtmodule 20 und 30 ist jeweils ein separates Steuergerät 26 und 36 vorgesehen. Insbesondere das Steuergerät 36 des zweiten Lichtmoduls 30 dient dazu, Teile der Mehrzahl der Lichtquellen 34 auszuschalten, um somit in der Fernlichtfunktion als zweite Lichtfunktion einen kleinen, selektiv entblendeten Bereich für ein entgegenkommendes Fahrzeug auszubilden. Besteht nun ein Fehler z. B. in der Regelungssensorik des Steuergeräts 36 des zweiten Lichtmoduls 30, so kann dieser Fehler von einer Kontrolleinheit 50, welche bei dieser Ausführungsform in der Recheneinheit 40 ausgebildet ist, erkannt werden. Dieser erkannte Fehler führt zur Ausführung eines erfindungsgemäßen Verfahrens in der Recheneinheit 40, so dass das zweite Lichtmodul 30 ausgeschaltet wird, während das erste Lichtmodul 20 weiterbetrieben wird.

Die voranstehende Erläuterung der Ausführungsformen beschreibt die vorliegende Erfindung ausschließlich im Rahmen von Beispielen. Selbstverständlich können einzelne Merkmale der vorliegenden Erfindung, sofern technisch sinnvoll, frei miteinander kombiniert werden, ohne den Rahmen der in den Ansprüchen definierten Erfindung zu verlassen.

### Bezugszeichenliste

- 10: Lichtsystem
- 20: Erstes Lichtmodul
- 24: Lichtquelle
- 26: Steuergerät erstes Lichtmodul
- 30: Zweites Lichtmodul
- 32: Mechanische Aktorik
- 34: Lichtquelle
- 36: Steuergerät zweites Lichtmodul
- 40: Recheneinheit
- 50: Kontrolleinheit

- 100: Fahrzeug
- 110: Erster Ausleuchtbereich
- 120: Zweiter Ausleuchtbereich

## Patentansprüche

1. Verfahren für den Betrieb eines Lichtsystems (10) zur Erzeugung einer ersten und einer zweiten Lichtfunktion mit jeweils einem separaten Lichtmodul (20, 30), wobei zumindest die zweite Lichtfunktion einen veränderbaren Ausleuchtbereich (120) aufweist, wobei die erste Lichtfunktion ein Abblendlicht und die zweite Lichtfunktion ein Fernlicht eines Fahrzeugs ist, wobei durch eine Veränderung des Ausleuchtbereichs (120) der zweiten Lichtfunktion ein selektives Entblenden des Gegenverkehrs erzeugbar ist, mit den folgenden Schritten:
- Erkennen eines Fehlers bei dem veränderbaren Ausleuchtbereich (120) der zweiten Lichtfunktion,
- Ausschalten des Lichtmoduls (30) der zweiten Lichtfunktion,
- Weiterbetrieb des Lichtmoduls (20) der ersten Lichtfunktion,
wobei das Verfahren durch eine Recheneinheit (40) ausgeführt wird, wobei die Erkennung des Fehlers zumindest teilweise durch eine aktive Überwachung z.B. mittels Kamerasystemen, des
durch die zweite Lichtfunktion erzeugten Ausleuchtbereichs (120) durchgeführt wird, wobei das Lichtsystem (10) zumindest eine Kontrolleinheit (50) aufweist, um den Fehler bei dem veränderbaren Ausleuchtbereich (120) der zweiten Lichtfunktion zu erkennen.

2. Verfahren nach Anspruch 1,
**dadurch gekennzeichnet,**
**dass** der Weiterbetrieb des Lichtmoduls (20) der ersten Lichtfunktion mit erhöhter Lichtleistung erfolgt.

3. Lichtsystem (10) eines Fahrzeugs zur Erzeugung einer ersten und einer zweiten Lichtfunktion, wobei zumindest die zweite Lichtfunktion einen veränderbaren Ausleuchtbereich (120) aufweist, wobei die erste Lichtfunktion ein Abblendlicht und die zweite Lichtfunktion ein Fernlicht des Fahrzeugs ist, wobei durch eine Veränderung des Ausleuchtbereichs (120) der zweiten Lichtfunktion ein selektives Entblenden des Gegenverkehrs erzeugbar ist,
wobei zumindest ein erstes Lichtmodul (20) zur Erzeugung der ersten Lichtfunktion und wenigstens ein zweites Lichtmodul (30) zur Erzeugung der zweiten Lichtfunktion vorgesehen sind, wobei im Falle eines Fehlers bei dem veränderbaren Ausleuchtbereich (120) der zweiten Lichtfunktion das zweite Lichtmodul (30) ausgeschaltet und das erste Lichtmodul (20) weiterbetrieben wird, wobei eine Recheneinheit (40) vorgesehen ist, welche für die Ausführung eines Verfahrens mit den Merkmalen eines der Ansprüche 1 bis 2 ausgebildet ist, wobei zumindest eine Kontrolleinheit (50) vorgesehen ist, um einen Fehler bei dem veränderbaren Ausleuchtbereich (120) der zweiten Lichtfunktion zu erkennen.

4. Lichtsystem (10) nach Anspruch 3,
**dadurch gekennzeichnet,**
**dass** das zweite Lichtmodul (30) eine mechanische Aktorik (32) aufweist, um den Ausleuchtbereich (120) der zweiten Lichtfunktion zu verändern.

5. Lichtsystem (10) nach einem der Ansprüche 3 oder 4,
**dadurch gekennzeichnet,**
**dass** das zweite Lichtmodul (30) eine Mehrzahl von Lichtquellen (34) aufweist, welche insbesondere matrixförmig zueinander angeordnet sind, um den Ausleuchtbereich (120) der zweiten Lichtfunktion zu verändern.

6. Lichtsystem (10) nach einem der Ansprüche 3 bis 5,
**dadurch gekennzeichnet,**
**dass** die Lichtmodule (20, 30) Lichtquellen (24, 34) mit Leuchtmitteln in Form von LEDs aufweisen.

## Claims

1. Process for the operation of a light system (10) for generating a first and a second light function each with a separate light module (20, 30), where at least the second light function features a modifiable illumination area (120), where the first light function is a vehicle's low beam and the second function is a vehicle's high beam, where a change in the illumination area (120) of the second light function makes it possible to reduce the glare on the oncoming traffic, involving the following steps:
- recognition of an error in the modifiable illumination area (120) of the second light function,
- switching off of the light module (30) of the second light function,
- continued operation of the light module (20) of the first light function,
where the process is executed by a processing unit (40), where recognition of the error is at least partially performed by active monitoring, e.g. by means of a camera system, of the illumination area (120) generated by the second light function, where the light system (10) features at least one control unit (50) in order to identify the error in the modifiable illumination area (120) of the second light function.

2. Process in accordance with Claim 1,
**characterized in that**
operation of the light module (20) of the first light function continues with higher light output.

3. Light system (10) of a vehicle for generating a first and a second light function, where at least the second light function features a modifiable illumination area (120), where the first light function is the vehicle's low beam and the second function is the vehicle's high beam, where a change in the illumination area (120) of the second light function makes it possible to selectively reduce the glare on the oncoming traffic,
where at least one first light module (20) is provided for generating the first light function and at least one second light module (30) for generating the second light function, where in the event of an error in the modifiable illumination area (120) of the second light function the second light module (30) is switched off and the first light module (20) continues to operate, where a processing unit (40) is designed with the features of one of Claims 1 through 2, where at least one control unit (50) is provided for identifying an error in the modifiable illumination area (120) of the second light function.

4. Light system (10) in accordance with Claim 3,
**characterized in that**
the second light module (30) features a mechanical actuator system (32) to modify the illumination area (120) of the second light function.

5. Light system (10) in accordance with one of the Claims 3 or 4,
**characterized in that**
the second light module (30) features a plurality of light sources (34) that are, in particular, arranged in a matrix in relation to each other in order to modify the illumination area (120) of the second light function.

6. Light system (10) in accordance with one of Claims 3 through 5,
**characterized in that**
the light modules (20, 30) feature light sources (24, 34) with lamps in the form of LEDs.

## Revendications

1. Procédé d'exploitation d'un système d'éclairage (10) pour générer une première et une deuxième fonction d'éclairage avec chacune un module lumineux distinct (20, 30), la deuxième fonction d'éclairage au moins présentant une zone d'éclairage variable (120), la première fonction d'éclairage étant un feu de croisement et la deuxième fonction d'éclairage un feu de route d'un véhicule, une modification de la zone d'éclairage (120) de la deuxième fonction d'éclairage permettant une élimination sélective de l'éblouissement des usagers de la route arrivant en sens inverse, comportant les étapes suivantes :
- détection d'un défaut dans la zone d'éclairage variable (120) de la deuxième fonction d'éclairage,
- extinction du module lumineux (30) de la deuxième fonction d'éclairage,
- poursuite de l'allumage du module lumineux (20) de la première fonction d'éclairage,
le procédé étant exécuté par un processeur (40), la détection du défaut étant exécutée au moins en partie par une surveillance active, par exemple au moyen de systèmes de caméra, de la zone d'éclairage (120) générée par la deuxième fonction lumineuse, le système d'éclairage (10) comprenant au moins une unité de commande (50) pour détecter le défaut dans la zone d'éclairage variable (120) de la deuxième fonction lumineuse.

2. Procédé selon la revendication 1,
**caractérisé en ce que**
la poursuite de l'allumage du module lumineux (20) de la première fonction d'éclairage s'effectue avec une puissance lumineuse accrue.

3. Système d'éclairage (10) d'un véhicule pour générer une première et une deuxième fonction d'éclairage, la deuxième fonction d'éclairage au moins présentant une zone d'éclairage variable (120), la première et une deuxième fonction d'éclairage étant un feu de croisement et la deuxième fonction d'éclairage un feu de route d'un véhicule, une modification de la zone d'éclairage (120) de la deuxième fonction d'éclairage permettant une élimination sélective de l'éblouissement des usagers de la route arrivant en sens inverse,
dans lequel au moins un premier module lumineux (20) est prévu pour générer la première fonction d'éclairage et au moins un deuxième module lumineux (30) est prévu pour générer la deuxième fonction d'éclairage, sachant qu'en cas de défaut dans la zone d'éclairage variable (120) de la deuxième fonction d'éclairage, le deuxième module lumineux (30) est désactivé et le premier module lumineux (20) continue à fonctionner, dans lequel un processeur (40) est prévu pour l'exécution d'un procédé présentant les caractéristiques de l'une des revendications 1 à 2, dans lequel au moins une unité de commande (50) est prévue pour détecter un défaut dans la zone d'éclairage variable (120) de la deuxième fonction d'éclairage.

4. Système d'éclairage (10) selon la revendication 3,
**caractérisé en ce que**
le deuxième module lumineux (30) comporte un actionneur mécanique (32) permettant de modifier la zone d'éclairage (120) de la deuxième fonction d'éclairage.

5. Système d'éclairage (10) selon l'une des revendications 3 ou 4,
**caractérisé en ce que**
le deuxième module lumineux (30) comporte plusieurs sources lumineuses (34) disposées en forme de matrice l'une par rapport à l'autre afin de pouvoir modifier la zone d'éclairage (120).

6. Système d'éclairage (10) selon l'une des revendications 3 à 5,
**caractérisé en ce que**
les modules lumineux (20, 30) comportent des sources lumineuses (24, 34) dotées d'ampoules sous forme de LED.
